# EUROPÄISCHE PATENTANMELDUNG

(11) **EP 1 231 761 A2**
(43) Veröffentlichungstag der Anmeldung: **14.08.2002**
(21) Anmeldenummer: 01127024.6
(22) Anmeldetag: 14.11.2001
(51) Int. Cl.: H04M 1/27, H04M 1/725

(54) **Kommunikationsgerät und Kommunikationsverfahren zur optimalen Sprachübertragung**

(30) Priorität: 09.02.2001 DE 10105949
(71) Anmelder: Tenovis GmbH & Co. KG, 60326 Frankfurt am Main (DE)
(72) Erfinder: Steuer, Manfred, 65719 Hofheim am Taunus (DE)
(74) Vertreter: Leson, Thomas Johannes Alois, Dipl.-Ing.

(57) **Zusammenfassung**

Gezeigt wird ein Kommunikationsgerät und ein Kommunikationsverfahren bei dem sendeseitig Schallwellen in analoge Signale, die analogen Signale in digitale Signale und die digitalen Signale in reduzierte Signale umgewandelt und übertragen werden und empfangsseitig die empfangenen Signale in digitale Signale, die digitalen Signale in analoge Signale und die analogen Signale in Schallwellen umgewandelt und an einen Lautsprecher ausgegeben werden, wobei zur Reduktion des digitalen Signals die in dem digitalen Signal enthaltenen gesprochenen Worte ermittelt und in codierter Form übertragen werden.

## Beschreibung

Die Erfindung bezieht sich auf ein Kommunikationsgerät sowie ein Kommunikationsverfahren zur Übertragung von Sprache von einem Kommunikationsgerät zu einem anderen Kommunikationsgerät.

Kommunikationsgeräte und Kommunikationsverfahren zu diesem Zweck sind grundsätzlich bekannt. Beim herkömmlichen Telefon werden Schallwellen in elektrische Signale umgewandelt, übertragen und beim Empfänger wieder in Schallwellen umgewandelt. Im drahtlosen GSM-Netz werden die Schallwellen auch zunächst in analoge Signale und diese dann in digitale Signale umgewandelt, wobei vor deren Übersendung eine Reduzierung der digitalen Signale stattfindet.

Darüber hinaus ist es auch noch bekannt, über das Internet zu telefonieren, wobei auch hier eine Reduzierung der digitalen zu übertragenden Daten stattfindet.

Mit der Erfindung soll ein Kommunikationsgerät bzw. ein Kommunikationsverfahren angegeben werden, bei dem eine Sprachübertragung mit einer möglichst geringen Datenrate erzielt wird.

Hierzu wird vorgeschlagen, die in dem zu übertragenden Sprachsignal enthaltenen gesprochenen Wörter zu ermitteln und diese in codierter Form zu übertragen.

Bei der Codierung der ermittelten Wörter können diese zunächst in Buchstaben aufgeteilt und dann die Buchstaben codiert werden, wobei sich zur Codierung der Buchstaben der ASCII Code anbietet.

Zur weiteren Verringerung der Datenrate des zu übertragenden Sprachsignals können die reduzierten Signale vor der Verschickung noch komprimiert werden.

Empfängerseitig wird bei diesem Verfahren das reduzierte Signal wieder in ein Sprachsignal umgewandelt, dem jedoch alle klanglichen Eigenheiten des ursprünglichen Sprachsignals fehlen. Um diesem Umstand zu begegnen, können charakteristische Signale ermittelt werden, die die Sprechweise des Sprechers charakterisieren und die vor Beginn der Übertragung des reduzierten Signals verschickt werden. Alternativ hierzu können die charakteristischen Signale auch während des Gesprächs ermittelt, aktualisiert und fortlaufend zu vorbestimmten Zeitpunkten oder Ereignissen übertragen werden.

Darüber hinaus können die reduzierten Signale vor Verschickung auch in eine Bilddatei umgewandelt werden. Dies erlaubt beispielsweise die Verschickung an ein Faxgerät.

Die Erfindung wird nachfolgend anhand der Figuren erläutert.

Die Figur 1 zeigt ein aus zwei Kommunikationsgeräten bestehendes Kommunikationssystem.

Die Figur 2 zeigt ein bevorzugtes Ausführungsbeispiel des Kommunikationsgerätes gemäß der Erfindung.

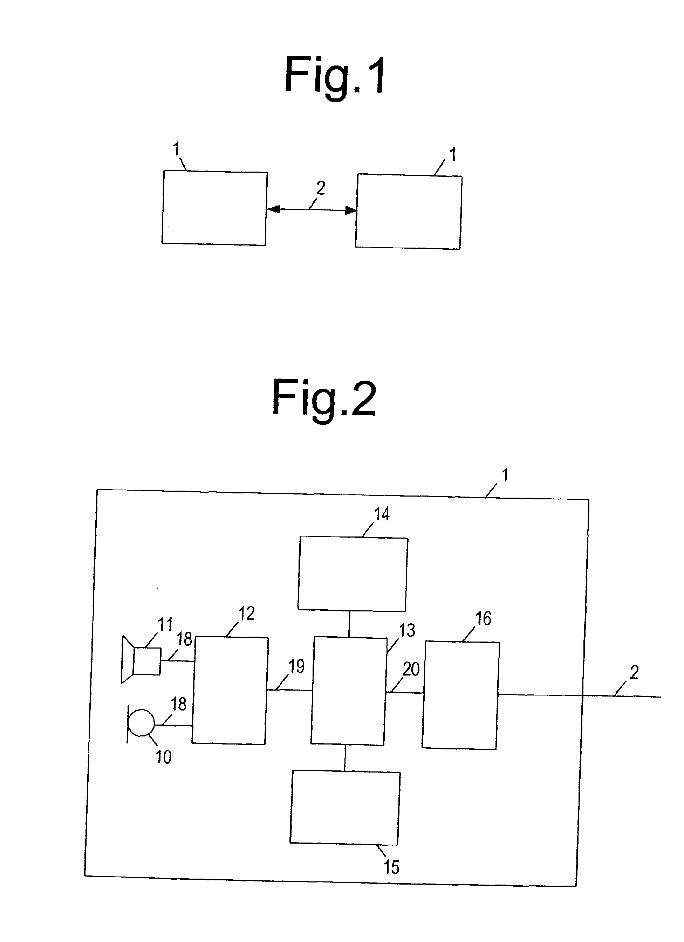

Die Figur 1 zeigt zwei Kommunikationsgeräte 1 sowie einen Kommunikationskanal 2.

Bei den Kommunikationsgeräten 1 kann es sich um gleiche oder vergleichbare Kommunikationsgeräte 1 handeln. Jedoch ist es auch möglich, dass eines der Kommunikationsgeräte 1 lediglich zum Abgeben von Signalen vorgesehen ist, wohingegen das andere Kommunikationsgerät 1 nur zum Empfang von Signalen vorgesehen ist. Die beiden Kommunikationsgeräte 1 weisen in diesem Fall jeweils nur die hierfür erforderlichen Komponenten auf. Darüber hinaus kann es sich bei dem einen Kommunikationsgerät 1 um ein mit dem Festnetz verbundenes Telefon handeln, wohingegen das andere Kommunikationsgerät 1 ein Handy sein kann. Darüber hinaus kann es sich bei jedem der Kommunikationsgeräte 1 selbstverständlich auch um ein Datenverarbeitungsgerät wie beispielsweise einen PC handeln.

Eine entsprechende Vielzahl von Möglichkeiten gibt es für den Kommunikationskanal 2. Bei dem Kommunikationskanal 2 kann es sich um ein privates oder öffentliches Telefonnetz, ein privates oder öffentliches Datennetz oder um ein privates oder öffentliches Funknetz handeln. Gleichzeitig kann der Kommunikationskanal 2 auch aus einer beliebigen Mischung dieser Varianten bestehen.

In der Figur 2 wird ein bevorzugtes Ausführungsbeispiel eines erfindungsgemäßen Kommunikationsgerätes 1 gezeigt. Dieses Kommunikationsgerät 1 umfasst ein Mikrofon 10, einen Lautsprecher 11, eine Wandlereinrichtung 12, eine Verarbeitungseinrichtung 13, eine Anzeigeeinrichtung 14, eine Eingabeeinrichtung 15 und eine Übertragungseinrichtung 16.

Bei dem Mikrofon 10 kann es sich um jede Art von Mikrofon handeln, wie z.B. ein elektrodynamisches oder ein Kondensatormikrofon. Das Mikrofon 10 kann im Kommunikationsgerät 1 angeordnet sein oder extern und mit diesem verbunden.

Anstelle des Lautsprechers 11 kann auch ein Kopfhörer oder eine ähnliche Anordnung vorgesehen sein.

Bei der Wandlereinrichtung 12 handelt es sich um eine Einrichtung zur Umwandlung von analogen Signalen 18 in digitale Signale 19 bzw. zur Umwandlung von digitalen Signalen 19 in analoge Signale 18. Hierfür sind in der Wandlereinrichtung 12 A/D Wandler bzw. Filtereinrichtungen wie Tiefpässe vorgesehen. Bei der Wandlereinrichtung 12 kann es sich um eine Soundkarte handeln.

Die Verarbeitungseinrichtung 13 wird vorzugsweise durch einen Mikrocomputer bzw. einen Computer gebildet und umfasst eine Speichereinrichtung zur Speicherung von Programmen, einen Arbeitsspeicher, eine CPU und zumindest einen internen Bus. In der Speichereinrichtung der Verarbeitungseinrichtung 13 sind zumindest ein Programm zur Steuerung des Kommunikationsgerätes 1 sowie ein Programm zur Spracherkennung bzw. ein Programm zur Umwandlung eines Buchstabencodes in ein Sprachsignal abgelegt.

Die Anzeigeeinrichtung 14 kann Bestandteil des Kommunikationsgerätes 1 sein, oder es kann sich um eine mit dem Kommunikationsgerät 1 verbundene externe Anzeigeeinrichtung 14 wie beispielsweise einen Monitor handeln.

Ebenso kann die Eingabeeinrichtung 15 Bestandteil des Kommunikationsgerätes 1 sein oder beispielsweise in Form eines Keyboards extern angeordnet sein und mit dem Kommunikationsgerät 1 verbunden sein.

Bei der Übertragungseinrichtung 16 handelt sich um eine an den jeweiligen Kommunikationskanal 2 angepasste Einrichtung. Dementsprechend kann es sich bei der Übertragungseinrichtung 16 um ein Modem oder um eine Sende- und Empfangseinrichtung handeln.

Bei dem bevorzugten Ausführungsbeispiel ist das Kommunikationsgerät 1 nach Figur 2 mit einem gleichartigen Kommunikationsgerät 1 über einen Kommunikationskanal 2 verbunden und beide Kommunikationsgeräte 1 sind sowohl zum Senden als auch zum Empfangen von Kommunikationssignalen geeignet.

Beim Betrieb des Kommunikationsgerätes 1 gibt die Bedienperson über die Eingabeeinrichtung 15 die Nummer bzw. die Adresse des gewünschten Kommunikationsgeräte ein, mit dem eine Verbindung aufgebaut werden soll. Nach Aufbau der Verbindung werden die vom Benutzer gesprochenen Worte über das Mikrofon 10 empfangen und als analoge Signale 18 an die Wandlereinrichtung 12 abgegeben, die diese in digitale Signale 19 umwandelt und der Verarbeitungseinrichtung 13 zuführt. In der Verarbeitungseinrichtung 13 werden mit Hilfe eines herkömmlichen Spracherkennungsprogramms die gesprochenen Wörter ermittelt und gleichzeitig auf der Anzeigeeinrichtung 14 zur Anzeige gebracht. Daraufhin werden die ermittelten Wörter des Sprachsignals in Buchstaben bzw. Zeichen zerlegt und codiert, wobei hier vorzugsweise der ASCII-Code Verwendung findet. Ebenfalls noch in der Verarbeitungseinrichtung 13 kann eine Komprimierung der codierten Buchstabensignale stattfinden, woraufhin eine Übermittlung des derart reduzierten Signals 20 an die Übertragungseinrichtung 16 vorgenommen wird, in der gegebenenfalls noch eine Paketbildung des reduzierten Signals erfolgt. Daraufhin wird das Kommunikationssignal über den Kommunikationskanal an das andere Kommunikationsgerät 1 verschickt.

Dementsprechend werden die verschickten Signale von einer Übertragungseinrichtung 16 empfangen, wobei bei paketweisem Empfang wieder eine Zusammenführung der Pakete in ein kontinuierliches Signal vorgenommen werden. In der Verarbeitungseinrichtung 13 des empfangenen Kommunikationsgerätes wird mit einem herkömmlichen Umwandlungsprogramm das reduzierte Signal 20 in ein digitales Signal 19 umgewandelt, welches einem Sprachsignal entspricht. Das digitale Signal 19 wird daraufhin der Wandlereinrichtung 12 zugeführt, die es als analoges Signal an den Lautsprecher 11 ausgibt. Gleichzeitig kann eine Anzeige des empfangenen reduzierten Signals an der Anzeigeeinrichtung 14 erfolgen.

Insoweit alle oben genannten Komponenten duplexfähig sind, kann die Kommunikation im Vollduplexverkehr erfolgen, d.h. beide Kommunikationsteilnehmer können gleichzeitig Sprechen und Hören.

Das jeweils wiedergegebene empfangene Signal ist dabei frei von jeder Individualität des Sprechers, d.h. unabhängig von der anrufenden Person wird das empfangene reduzierte Signal mit derselben Stimme und mit derselben Sprechweise wiedergegeben.

Um dieses Problem zu beheben, kann jeweils senderseitig vor Beginn der Kommunikation oder zu Beginn der Kommunikation ein für den Sprecher charakteristisches Signal ermittelt werden, das beispielsweise die Stimmlage und gegebenenfalls des Sprechrhythmus charakterisiert. Wird das Kommunikationsgerät 1 stets von derselben Person benutzt, kann dieses charakteristische Signal auch einmalig ermittelt und gespeichert werden und vor jeder neuen Kommunikation übermittelt werden. Wird das Kommunikationsgerät von unterschiedlichen Sprechern benutzt, muss das charakteristische Signal selbstverständlich vor Beginn oder zu Beginn der Kommunikation neu ermittelt werden und darauf folgend an das empfangende Kommunikationsgerät verschickt werden, das es bei der Umwandlung der reduzierten Signale in ein Sprechsignal berücksichtigt. Gegebenenfalls kann das charakteristische Signal auch während des Gesprächs fortlaufend ermittelt werden und stets neu übertragen werden. Bei dieser Vorgehensweise passt sich das charakteristische Signal stets der aktuellen Sprechweise des Sprechers an, so dass insgesamt ein noch natürlicheres Hörempfinden möglich ist.

Alternativ zu dem vorstehend beschriebenen Ausführungsbeispiel kann das reduzierte Signal in der Verarbeitungseinrichtung 13 auch in eine Bilddatei umgewandelt werden, die beispielsweise ein für die Faxübertragung geeignetes Format besitzt. In diesem Fall kann ein gesprochener Text auch direkt an ein Faxgerät gesendet werden. Bei dieser Betriebsweise wird vorzugsweise das gesamte Fax zunächst gesprochen und dann vor der Verschickung auf der Anzeigeeinrichtung 14 zur Anzeige gebracht und mittels der Eingabeeinrichtung 15 korrigiert. Ein solcher Korrekturvorgang kann gegebenenfalls auch bei dem bevorzugten Ausführungsbeispiel stattfinden.

Als eine weitere Alternative zu dem bevorzugten Ausführungsbeispiel ist vorstellbar, dass das Kommunikationsgerät 1 auch zum Empfang von normalen Sprachsignalen in Form von Signalschwankungen geeignet ist und in diesem Fall die Spracherkennung bei dem empfangenen Signal durchführt und das erkannte Sprachsignal auf der Anzeigeeinrichtung zur Anzeige bringt. Dieses Ausführungsbeispiel eignet sich entweder als Behindertentelefon oder als Anrufbeantworter. Des weiteren eignet sich ein solches Gerät auch zur Aufzeichnung eines herkömmlichen Gespräches.

Gezeigt wird ein Kommunikationsgerät und ein Kommunikationsverfahren bei dem sendeseitig Schallwellen in analoge Signale, die analogen Signale in digitale Signale und die digitalen Signale in reduzierte Signale umgewandelt und übertragen werden und empfangsseitig die empfangenen Signale in digitale Signale, die digitalen Signale in analoge Signale und die analogen Signale in Schallwellen umgewandelt und an einen Lautsprecher ausgegeben werden, wobei zur Reduktion des digitalen Signals die in dem digitalen Signal enthaltenen gesprochenen Worte ermittelt und in codierter Form übertragen werden.

## Patentansprüche

1. Kommunikationsgerät (1) mit
einem Mikrofon (10) zur Umwandlung von Schallwellen in analoge Signale (18)
einer Wandlereinrichtung (12) zur Umwandlung der analogen Signale in digitale Signale (19),
einer Verarbeitungseinrichtung (13) zur Umwandlung des digitalen Signals in ein reduziertes Signal (20) und
einer Übertragungseinrichtung (16) zur Verschickung des reduzierten Signals an ein anderes Kommunikationsgerät (1), **dadurch gekennzeichnet**
**dass** zur Reduktion der Datenmenge des digitalen Signals die in dem digitalen Signal enthaltenen gesprochenen Wörter ermittelt und in codierter Form an die Übertragungseinrichtung abgegeben werden.

2. Kommunikationsgerät nach Anspruch 1, **dadurch gekennzeichnet, dass** bei der Codierung der ermittelten Wörter diese zuerst in Buchstaben aufgeteilt und dann die Buchstaben codiert werden.

3. Kommunikationsgerät nach Anspruch 2, **dadurch gekennzeichnet, dass** die Buchstaben nach dem ASCII-Code codiert werden.

4. Kommunikationsgerät nach einem der vorhergehenden Ansprüche, **dadurch gekennzeichnet, dass** die reduzierten Signale vor der Verschickung komprimiert werden.

5. Kommunikationsgerät nach einem der vorhergehenden Ansprüche, **dadurch gekennzeichnet, dass** die Verarbeitungseinrichtung aus den digitalen Signalen charakteristische Signale ermittelt, die die Sprechweise des Sprechers charakterisieren und ebenfalls an das andere Kommunikationsgerät verschickt werden.

6. Kommunikationsgerät nach Anspruch 5, **dadurch gekennzeichnet, dass** die charakteristischen Signale während des Gespräches fortlaufend ermittelt und übermittelt werden.

7. Kommunikationsgerät nach einem der Ansprüche 1 bis 3, **dadurch gekennzeichnet, dass** die reduzierten Signale vor der Verschickung in eine Bilddatei umgewandelt werden.

8. Kommunikationsgerät nach einem der vorhergehenden Ansprüche, **dadurch gekennzeichnet,**
**dass** die Übertragungseinrichtung auch zum Empfang von Signalen von einem anderen Kommunikationsgerät vorgesehen ist,
**dass** die Verarbeitungseinrichtung auch zur Ausgabe der empfangenen Signale als digitale Signale an die Wandlereinrichtung vorgesehen ist,
**dass** ein Lautsprecher vorgesehen ist, und
**dass** die Wandlereinrichtung auch zur Ausgabe der von der Verarbeitungseinrichtung empfangenen digitalen Daten an den Lautsprecher vorgesehen ist.

9. Kommunikationsgerät nach einem der vorhergehenden Ansprüche, **dadurch gekennzeichnet, dass** als Übertragungseinrichtung ein Modem vorgesehen ist.

10. Kommunikationsgerät nach einem der Ansprüche 1 bis 8, **dadurch gekennzeichnet, dass** als Übertragungseinrichtung eine Sende- und Empfangseinrichtung vorgesehen ist.

11. Kommunikationsgerät nach einem der vorhergehenden Ansprüche, **dadurch gekennzeichnet, dass** eine Anzeigeeinrichtung (14) vorgesehen ist, auf der die zu verschickenden, reduzierten Signale oder die empfangenen, reduzierten Signale darstellbar sind.

12. Kommunikationsgerät nach einem der vorhergehenden Ansprüche, **dadurch gekennzeichnet, dass** eine Eingabeeinrichtung (15) vorgesehen ist, die zur Korrektur der zu verschickenden reduzierten Signale vorgesehen ist.

13. Kommunikationsverfahren zur sprachlichen Kommunikation zwischen zwei Kommunikationsgeräten, bei dem
sendeseitig Schallwellen in analoge Signale, analoge Signale in digitale Signale und digitale Signale in reduzierte Signale umgewandelt und übertragen werden und
empfangsseitig die empfangenen Signale in digitale Signale, die digitalen Signale in analoge Signale und die analogen Signale in Schallwellen umgewandelt und an einen Lautsprecher ausgegeben werden,
wobei zur Reduktion der digitalen Signale die in dem digitalen Signal enthaltenen gesprochenen Wörter ermittelt und codiert werden.

14. Kommunikationsverfahren nach Anspruch 13, **dadurch gekennzeichnet, dass** bei der Codierung der ermittelten Wörter diese zuerst in Buchstaben aufgeteilt und dann die Buchstaben codiert werden.

15. Kommunikationsverfahren nach Anspruch 13 oder 14, **dadurch gekennzeichnet, dass** die Buchstaben nach dem ASCII-Code codiert werden.

16. Kommunikationsverfahren nach einem der Ansprüche 13 bis 15, **dadurch gekennzeichnet, dass** die reduzierten Signale vor der Verschickung komprimiert werden.

17. Kommunikationsverfahren nach einem der Ansprüche 13 bis 16, **dadurch gekennzeichnet, dass** aus den digitalen Signalen charakteristische Signale ermittelt werden, die die Sprechweise des Sprechers charakterisieren und dass die charakteristischen Signale ebenfalls verschickt werden.

18. Kommunikationsverfahren nach Anspruch 17, **dadurch gekennzeichnet, dass** die charakteristischen Signale fortlaufend ermittelt und übertragen werden.

19. Kommunikationsverfahren nach einem der Ansprüche 13 bis 18, **dadurch gekennzeichnet, dass** die reduzierten Signale vor Verschickung in eine Bilddatei umgewandelt werden.
